# FASCICULE DE BREVET EUROPEEN

(11) **EP 2 263 862 B1**
(45) Date de publication et mention de la délivrance du brevet: **07.11.2012**
(21) Numéro de dépôt: 09162977.4
(22) Date de dépôt: 17.06.2009
(51) Int. Cl.: B29C 70/24, B29B 11/16, D04C 1/00, F01D 5/28, B29C 70/48, B29C 70/56, B29C 70/54, B29L 31/08, B29D 99/00, F01D 9/04, D04C 3/40, D04C 1/06

(54) **Procédé de fabrication de préformes tressées**
Verfahren zur Herstellung von geflochtenen Vorformlingen
Method for manufacturing braided preforms

(43) Date de publication de la demande: 22.12.2010
(73) Titulaire: Techspace Aero S.A., 4041 Milmort (BE)
(72) Inventeur: Laurent, Philippe, 4620, FLERON (BE)
(74) Mandataire: pronovem

(56) Documents cités:
- US-A- 5 018 271
- US-A- 5 549 947
- US-A1- 2002 008 177

## Description

### Objet de l'invention

La présente invention se rapporte à un procédé automatique de fabrication de préformes tressées pour des aubes statoriques et rotoriques dans le domaine aéronautique.

Elle se rapporte également à l'aube obtenue selon le procédé.

### Etat de la technique

Dans les moteurs aéronautiques, il est connu que la majorité des aubes sont actuellement en titane. Le remplacement du titane par un matériau composite à matrice organique (CMO) permettrait un gain de masse important. Ainsi, dans l'hypothèse où la géométrie de l'aube - principalement déterminée à partir de considérations aéronautiques - n'est pas modifiée, le gain de masse relatif entre l'aube en titane et l'aube CMO s'exprime dans le rapport des densités qui vaut ∼3, ce qui explique l'intérêt porté aux aubes CMO.

Dans un contexte de production en grande série, il importe d'imaginer un procédé de fabrication conduisant à un coût unitaire bas et une répétatibilité des pièces élevée. L'aube doit par ailleurs satisfaire les différents critères du cahier des charges, à savoir des critères de poids (par exemple, une réduction de masse de 20% du redresseur assemblé dans le cas des aubes statoriques), d'aérodynamisme (profil, épaisseur du bord d'attaque et du bord de fuite, état de surface) et des critères de résistance mécanique (raideur et tenue mécanique) et de tenue à l'érosion.

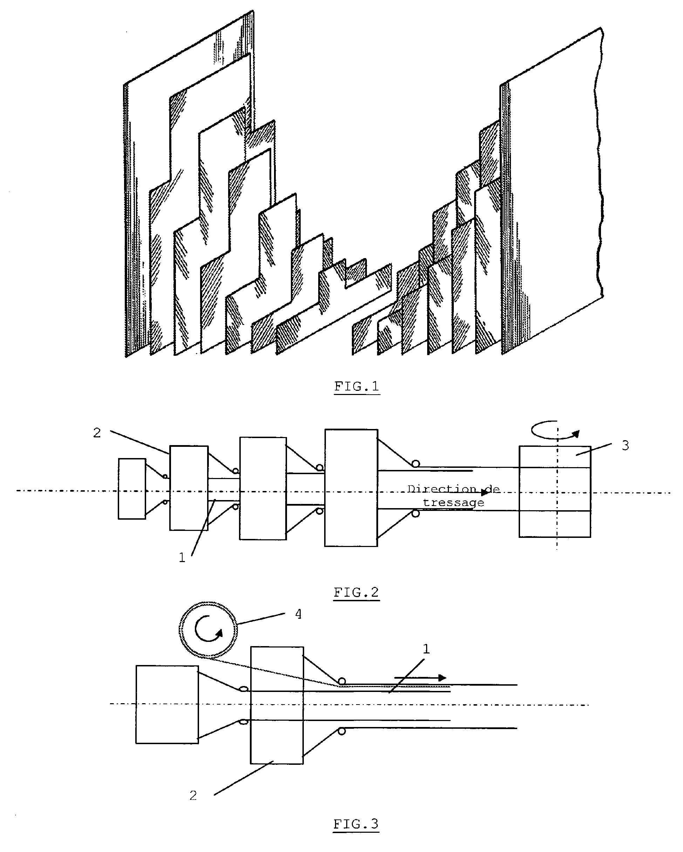

Une solution proposée à ce jour consiste à réaliser l'aube par drapage de plis. Le drapage consiste à créer une pièce de façon constructive par ajout de matière s'effectuant par superposition de couches successives sur un outillage. Le brevet CA 1004986 montre un exemple de réalisation d'aubes par superposition de quatorze plis de dimension variable (voir figure 1).

Cette solution souffre de plusieurs inconvénients:
- La découpe de plis de petite taille est délicate et le renfort de fibres sèches est fortement susceptible de se désintégrer lors de la manipulation.
- Les raccords entre les plis, plus particulièrement au bord d'attaque de l'aube, sont sujets à des concentrations de contraintes.
- Il y a un risque de délamination entre les plis.
- Le drapage est une solution coûteuse car nécessitant beaucoup de main d'oeuvre; elle présente également un manque de répétabilité.

Dans l'état de l'art (Voskamp et al, « Advances in overbraiding for composite part manufacturing » Eurocarbon B.V., Advanced braiding and weaving technology, 37th ISTC - Seattle, WA - October 31 - November 3, 2005), il est également proposé de réaliser des préformes de pièces composites (par ex. pour applications automobiles) par surtressage (« *overbraiding* »). Cette technique consiste à réaliser la préforme par tressage autour d'un noyau de section variable. Des couches successives peuvent être tressées les unes sur les autres, selon l'épaisseur désirée, par passage successif du noyau à travers la machine de tressage. Ensuite, soit le noyau reste dans le produit final obtenu après injection de résine, soit il est retiré.

Le document US 2002/0008177 décrit une préforme d'aube constituée par une pluralité de couches fibreuses tressées, cousues et découpées à la longueur désirée. Le document US 5 018 271 décrit un procédé de tressage d'une préforme tubulaire pour une aube.

### Buts de l'invention

La présente invention vise à fournir une solution qui permette de s'affranchir des inconvénients de l'état de la technique.

La présente invention vise plus particulièrement à fournir un procédé automatique pour la réalisation de préformes d'aubes afin de répondre au volume de demande et afin d'augmenter la répétabilité.

La présente invention vise également à fournir un procédé permettant de réaliser des préformes avec des propriétés mécaniques meilleures que celles obtenues par drapage de plis.

La présente invention vise également à fournir un procédé s'affranchissant de l'utilisation d'un noyau pour la fabrication.

### Principaux éléments caractéristiques de l'invention

La présente invention se rapporte à un procédé automatique de fabrication d'une préforme d'aube statorique ou rotorique de turbomachine, **caractérisé en ce qu**'il comporte au moins les étapes successives suivantes:
a) une étape de tressage hélicoïdal d'une pluralité de tresses tubulaires emboîtées, encore appelées tresses gigognes, ladite étape étant réalisée dans des machines de tressage placées en enfilade dans une direction de tressage;
b) une étape d'aplatissement des tresses gigognes;
c) une étape de couture des tresses gigognes entre elles dans une direction perpendiculaire à la direction de tressage;
d) une étape d'enroulement des tresses gigognes sur un mandrin de transport;
e) une étape de découpe des tresses gigognes déroulées hors du mandrin de transport, ladite découpe s'effectuant dans une direction perpendiculaire à la direction de tressage.

Selon des modes particuliers de l'invention, le procédé comporte au moins une ou une combinaison appropriée des caractéristiques suivantes:
- dans l'étape a), des fils à 0°, c'est-à-dire parallèles à la direction de tressage, sont insérés sur au moins une partie du périmètre d'une ou plusieurs tresses tubulaires lors de la fabrication de la ou des tresses; la distribution inhomogène de fils à 0° sur le périmètre de la ou des tresses permet de réaliser des préformes d'aubes d'épaisseur variable suivant leur corde;
- dans l'étape a), au moins un fil à 0° ou un toron à 0°, c'est-à-dire parallèle à la direction de tressage, est inséré entre les tresses tubulaires en vue de réaliser des préformes d'aubes d'épaisseur variable suivant leur corde;
- les fils ou torons insérés ont des diamètres différents;
- les tresses tubulaires sont disposées de manière non concentrique dans l'étape a) afin de réaliser des préformes d'aubes d'épaisseur variable suivant leur corde;
- la vitesse circonférentielle de tressage est ajustée en cours de fabrication des tresses tubulaires de sorte à faire varier de façon périodique l'épaisseur des tresses; la variation de vitesse permet ainsi de réaliser des préformes d'aubes présentant une faible variation d'épaisseur suivant leur hauteur;

- au moins une des tresses tubulaires comporte des fils à 0° en matériau élastomère ou en matériau thermorétractable;
- les fils à 0° en matériau élastomère sont mis en précontrainte lors de l'étape a);
- après l'étape d) d'enroulement, les tresses tubulaires déroulées hors du mandrin sont étendues et clamées dans une étape additionnelle d') et, après l'étape de découpe e), la ou les tresses tubulaires comprenant les fils élastomères se rétracte(nt);
- les fils sont mis en précontrainte avec des niveaux de tension différents afin de donner à la ou aux tresses tubulaires rétractées la géométrie désirée;
- lorsque les fils sont thermorétractables, le procédé comprend une étape additionnelle f) de chauffage des tresses gigognes afin de permettre la rétraction des fils thermorétractables, ladite étape f) se déroulant après l'étape e) de découpe;
- le chauffage appliqué n'est pas uniforme et/ou les fils thermorétractables ont des coefficients de rétraction différents afin de donner à la ou aux tresses tubulaires rétractées la géométrie désirée;
- après la réalisation de la préforme, il y a une étape additionnelle d'injection de résine de la préforme par le procédé RTM (Resin Transfer Moulding).

La présente invention se rapporte également à une aube statorique ou rotorique de turbomachine obtenue au moyen du procédé tel que décrit ci-dessus; ladite aube pouvant présenter une épaisseur variable suivant sa corde et/ou suivant sa hauteur.

### Brève description des figures

La figure 1, déjà mentionnée, représente un drapage de plis pour une aube selon l'état de la technique.

La figure 2 représente schématiquement la fabrication de tresses tubulaires gigognes selon l'invention.

La figure 3 représente schématiquement le déroulement d'un fil ou d'un toron entre les tresses tubulaires.

La figure 4 représente schématiquement l'insertion de fils à 0° sur une partie de la circonférence de la tresse afin de former une tresse hybride c'est-à-dire à la fois biaxiale et triaxiale.

La figure 5 représente schématiquement le placement non concentrique des tresses tubulaires suivi de l'étape d'aplatissement et ultérieurement après les étapes de couture, d'enroulement et de découpe (non représentées) de l'étape de moulage RTM (Resin Transfer Moulding).

La figure 6 représente schématiquement une vue en coupe dans la direction de tressage d'une tresse d'épaisseur variable obtenue par modulation de la vitesse circonférentielle de tressage.

La figure 7 représente schématiquement en A) et en B) respectivement une vue du haut et des vues du haut et de profil d'un exemple de préforme constituée de deux tresses tubulaires, l'une intérieure et l'autre extérieure, respectivement avant et après découpe, la tresse intérieure comportant des fils à 0° en élastomère.

La figure 8 représente schématiquement une vue du haut d'un autre exemple de préforme constituée de deux tresses tubulaires comme sur la figure 7, la tresse intérieure comportant des fils à 0° en élastomère.

La figure 9 représente un stator résultant respectivement de l'emboîtement des plateformes inférieures et des plateformes supérieures des aubes statoriques.

### Légende :

(1) Tresse tubulaire
(2) Machine de tressage
(3) Mandrin de transport
(4) Fil à 0°
(5) Fil orienté, par exemple à +/- 45° ou à +/-60°
(6) Zone riche en résine
(7) Système de clamage
(8) Couture
(9) Tresse tubulaire intérieure
(10) Tresse tubulaire extérieure
(11) Aube statorique en "C"

### Description détaillée de l'invention

L'idée de base de la présente invention est de réaliser des préformes d'aubes statoriques ou rotoriques à partir de tresses tubulaires s'emboîtant les unes dans les autres, encore appelées tresses gigognes. Par opposition au drapage de plis où le tissu est découpé en morceaux, le procédé selon l'invention permet de conserver l'intégrité des tresses tubulaires. Ce faisant, la raideur et la tenue en torsion sont assurées par la continuité des fils orientés (placement hélicoïdal) et le risque de délamination est fortement diminué.

Le procédé de fabrication de préformes selon l'invention est automatique et comporte au moins cinq étapes.

Une première étape a) consiste en la fabrication des tresses gigognes. Une seconde étape b) consiste à aplatir les tresses gigognes. Une troisième étape c) consiste à coudre les tresses entre elles. Une quatrième étape d) consiste à enrouler les tresses sur un mandrin. Une cinquième étape e) consiste à découper les tresses déroulées hors du mandrin. Comme il sera spécifié plus loin, des variantes du procédé selon l'invention comportent également des étapes additionnelles.

### Description du procédé selon l'invention

A titre d'exemple, l'étape a) est décrite pour la fabrication d'une préforme d'aube à partir de quatre tresses tubulaires, ce qui correspond à une superposition de huit plis dans le cas d'une préforme drapée.

Dans une optique de fabrication en série, les tresses tubulaires 1 sont produites par quatre machines de tressage 2 disposées en enfilade dans la direction de tressage (voir figure 2). Au vu des diamètres de tresses nécessaires, on peut s'attendre à un encombrement diamétral d'environ un mètre par machine. Les tresses peuvent être biaxiales, c'est-à-dire qu'elles comportent des fils orientés à, par exemple, +/- 45° ou +/- 60°; elles peuvent être également triaxiales, c'est-à-dire qu'elles comportent en outre des fils orientés à 0°. Elles peuvent encore être hybrides comme cela sera explicité ci-dessous.

Dans la présente invention, le tressage des différentes tresses ne nécessite pas nécessairement l'utilisation d'un noyau et la mise à "bonne forme" de la préforme d'aube s'effectue par une combinaison inventive de différentes méthodes décrites ci-dessous.

La section droite d'une aube prise à une hauteur donnée présente une épaisseur variable le long de la corde qui est le segment joignant le bord d'attaque au bord de fuite d'une aube. Ce profil de type profilé NACA incurvé est dicté par l'aéronautique. Plusieurs méthodes peuvent permettre de réaliser une épaisseur variable suivant la corde. Une combinaison de deux ou plus d'entre elles conduit à un résultat très satisfaisant.

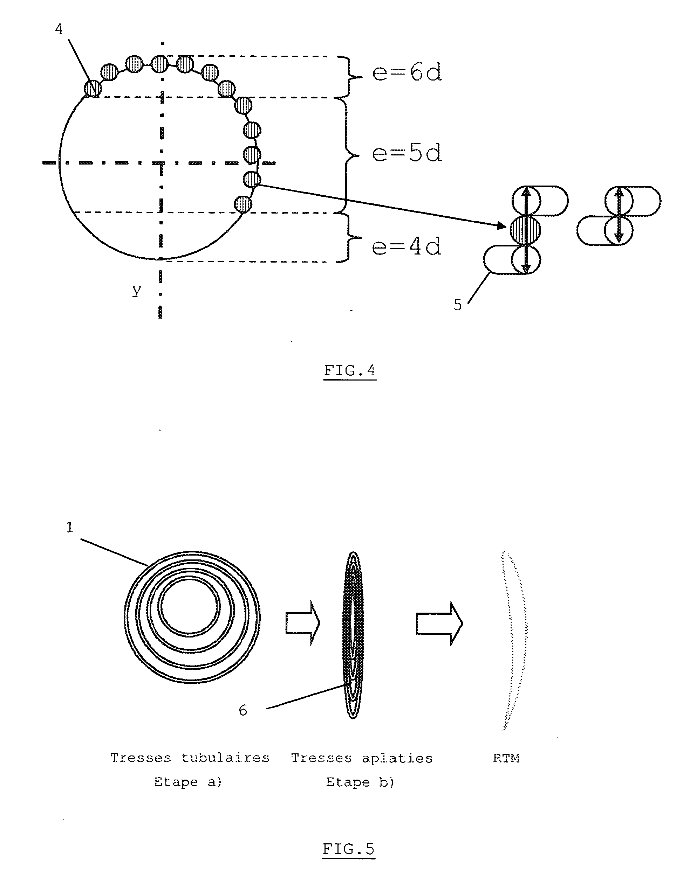

Une première méthode consiste à distribuer de manière inhomogène des fils 4 à 0° (c.à.d. parallèles à la direction de tressage):
- Soit par insertion d'un fil 4 ou toron (fils torsadés) entre les différentes tresses tubulaires 1 comme montré à la figure 3. Dans le cas d'utilisation d'un toron d'aramide (Kevlar®), ce dernier peut également jouer le rôle de rétention des débris en cas d'impact.
- Soit par utilisation d'une tresse hybride, à la fois biaxiale et triaxiale, c'est-à-dire que les fils à 0° sont directement insérés lors de la fabrication de la tresse biaxiale (cf. fabrication des tresses triaxiales). Ici, à la différence des tresses triaxiales, les fils 4 à 0° ne sont pas distribués de façon uniforme sur le périmètre comme illustré à la figure 4. L'avantage de cette méthode est que les fils 4 à 0° sont mécaniquement maintenus par les fils orientés 5 ce qui procure à la préforme une meilleure tenue. Après aplatissement de la tresse tubulaire selon l'axe y, il en résulte une variation graduelle de l'épaisseur de la tresse aplatie d'une épaisseur équivalente à quatre fois le diamètre du fil jusqu'à une épaisseur égale à six fois le diamètre du fil.
- Dans la même optique de tresses hybrides, les fils à 0° insérés peuvent être de diamètres différents (ex: 3k=3000 filaments pour former un fil, 6k=6000 filaments).

Une seconde méthode consiste en un placement relatif des différentes tresses tubulaires 1 de façon non concentrique comme illustré à la figure 5. Ceci est réalisé en excentrant les axes des machines de tressage placées en enfilade. L'excentrement peut être modulé en cours de fabrication par un déplacement latéral contrôlé des machines de tressage. Le placement non concentrique des différentes tresses tubulaires a pour but de créer une variation d'épaisseur suivant la corde de l'aube, une fois les tresses aplaties dans l'étape b) avant la finalisation de la pièce par moulage RTM (Resin Transfer Moulding). Ainsi, pour l'aube proprement dite, les tresses sont placées de manière non-concentrique car le bord d'attaque est plus épais que le bord de fuite tandis que pour la plateforme de l'aube, les tresses sont placées concentriquement car son épaisseur est constante.

La combinaison des tresses hybrides et des tresses non concentriques devrait conduire à un résultat satisfaisant. Il semble cependant intéressant d'insérer également un fil 4 à 0° en Kevlar® afin de combler les régions riches en résine 6 (voir figure 5), sources de fissures (point faible). Ce faisant, on assure par ailleurs une retenue des débris en cas d'impact.

L'épaisseur de l'aube peut également varier selon la hauteur c'est-à-dire dans la direction perpendiculaire à la corde. Cette variation d'épaisseur peut, selon l'aube particulière, être faible ou importante.

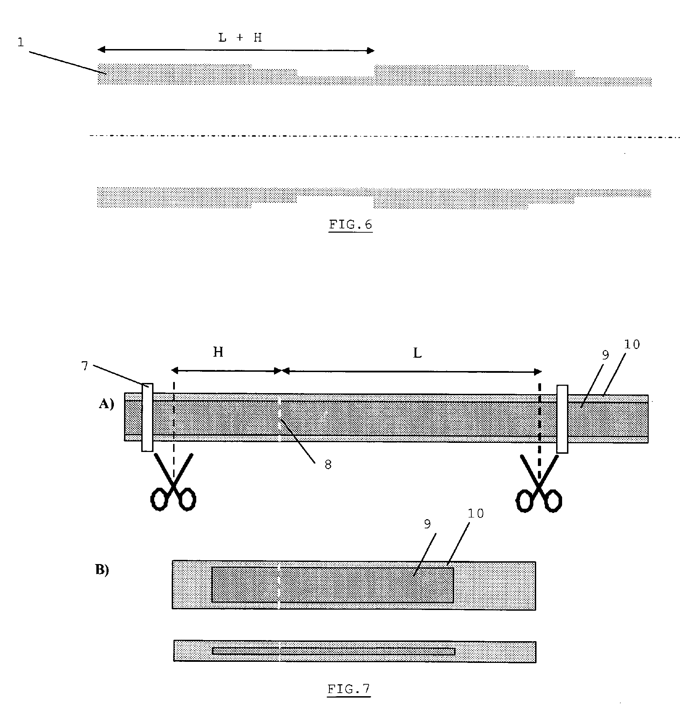

Dans le cas général d'aubes quasi-prismatiques, c.à.d. dont l'épaisseur ne varie pas de façon trop importante suivant la hauteur, la solution consiste à profiter d'un phénomène connu en tressage à savoir que l'épaisseur des tresses augmente avec l'angle de tressage ϑ. Cet angle de tressage dépend de la vitesse de production *V*, c.à.d. de la vitesse dans la direction de tressage, mais aussi la vitesse de tressage circonférentielle ω. Les vitesses de production *V₁*, *V₂, V₃, V₄* sont identiques car les tresses s'enroulent autour d'un seul et même mandrin 3 (voir figure 2). Cependant, il est possible de contrôler indépendamment les vitesses de tressage circonférentielles ω₁, ω₂, ω₃, ω₄ de façon à varier de façon périodique l'épaisseur de la tresse en cours de fabrication. La période à considérer correspond à la hauteur H de l'aube additionnée de la longueur L de la plateforme dans le cas d'une aube à plateforme intégrée comme représenté à la figure 6.

Dans le cas où la variation d'épaisseur suivant la hauteur de l'aube est importante, la solution repose sur l'utilisation de tresses triaxiales particulières où les fils à 0° sont constitués de fils élastomères ou de fils thermorétractables. Le procédé est dans ce cas adapté. A cet effet, les variantes du procédé relatives à l'utilisation de fils élastomères ou thermorétractables seront décrites plus loin.

L'étape b) (non représentée) du procédé selon l'invention consiste à aplatir les tresses gigognes pour former une "chaussette" multicouche. A titre d'exemple non limitatif, l'aplatissement peut s'effectuer par passage des tresses gigognes entre deux rouleaux ou par passage des tresses gigognes sur une poulie provoquant un changement de la direction de tressage.

Les tresses aplaties sont ensuite cousues entre elles dans l'étape c) de couture. La couture est effectuée suivant une direction perpendiculaire à la direction de tressage.

Cette étape (non représentée) se déroule avant enroulement sur le mandrin 3 (voir figure 2) et a un rôle double. Elle permet, d'une part, de solidariser les tresses tubulaires en un endroit donné et, d'autre part, de permettre un renfort à travers l'épaisseur au niveau du rayon aube (L)/plateforme (H) 8 (voir figure 7). L'épaisseur de la préforme aplatie est alors maximale à l'endroit de la couture où elle équivaut à environ huit plis.

A noter qu'une opération supplémentaire de couture peut également être réalisée de façon automatique pour renforcer certaines parties de la préforme (ex : bords, lèvres des futurs trous de fixation, etc.). Si l'aérodynamique le demande, il est possible d'ajuster très précisément l'épaisseur de la préforme grâce à une couture plus dense (broderie).

Après l'étape de couture c), les tresses sont enroulées sur un mandrin 3 de transport, c'est l'étape d) d'enroulement (voir figure 2). Ce mandrin 3 permet de tirer les quatre tresses tubulaires avec une vitesse identique lors de la fabrication. Il permet également de transporter de grandes longueurs de tresses vers, par exemple, la table de découpe. C'est la raison pour laquelle il est appelé mandrin de transport.

Les tresses sont ensuite déroulées hors du mandrin et découpées à la longueur désirée dans l'étape e) de découpe.

L'aube à réaliser avec ou sans plateforme intégrée peut avoir différentes géométries.

Dans le cas de la réalisation de l'aube uniquement (pale), c.à.d. d'un profil en "I", on peut découper la préforme à équidistance par rapport à la couture pour réaliser deux aubes identiques à la fois. Une troisième découpe au niveau de la couture est alors nécessaire pour séparer les deux aubes.

Dans le cas d'un profil en "L", c.à.d. d'une aube avec plateforme intégrée, la couture joue le rôle de renfort à travers l'épaisseur dans le rayon aube/plateforme comme mentionné précédemment.

Dans le cas d'un profil d'aube statorique en "C" ou en "Z", il est possible de réaliser deux zones situées de part et d'autre de l'aube (pale) qui seront ensuite pliées à 90° par rapport à celle-ci afin de faciliter l'assemblage mécanique (rivets, boulons, "lockbolts", etc.) de l'aube à la virole extérieure et à la virole intérieure.

### Description de variantes du procédé selon la présente invention

Dans une variante du procédé selon l'invention, les fils à 0° comprennent des fils en élastomère. Cette variante du procédé est utilisée lorsque l'aube à réaliser présente une grande variation d'épaisseur justifiant un lâcher de plis selon la hauteur comme mentionné précédemment. A titre d'exemple non limitatif, le procédé est décrit pour deux tresses emboîtées (voir figure 7). La tresse tubulaire intérieure 9 comporte des fils à 0° en élastomère. La tresse tubulaire extérieure 10 comporte des fils à 0° en fibres de carbone dans le cas d'une tresse triaxiale; elle peut également ne pas comporter de fils à 0° (cas d'une tresse biaxiale).

Dans cette variante du procédé, les fils à 0° élastomères sont mis en précontrainte (effort de traction) lors de l'étape a) de fabrication des tresses. Cela peut se faire en maîtrisant la tension dans les fils à 0°, par exemple, à l'aide d'un système de galet tendeur tel qu'utilisé dans les dispositifs pour bobineuses.

Après les étapes de couture c) et d'enroulement d), les tresses gigognes déroulées hors du mandrin sont étendues et clamées à plat à l'aide d'un système de clamage 7 dans une étape supplémentaire d').

Lors de l'étape de découpe e), deux découpes sont réalisées de part et d'autre de la couture 8 et la tresse tubulaire intérieure 9 se rétracte par relaxation des contraintes de tension existant dans les fils élastomères. Il en résulte une variation de l'épaisseur selon la hauteur de la préforme d'aube.

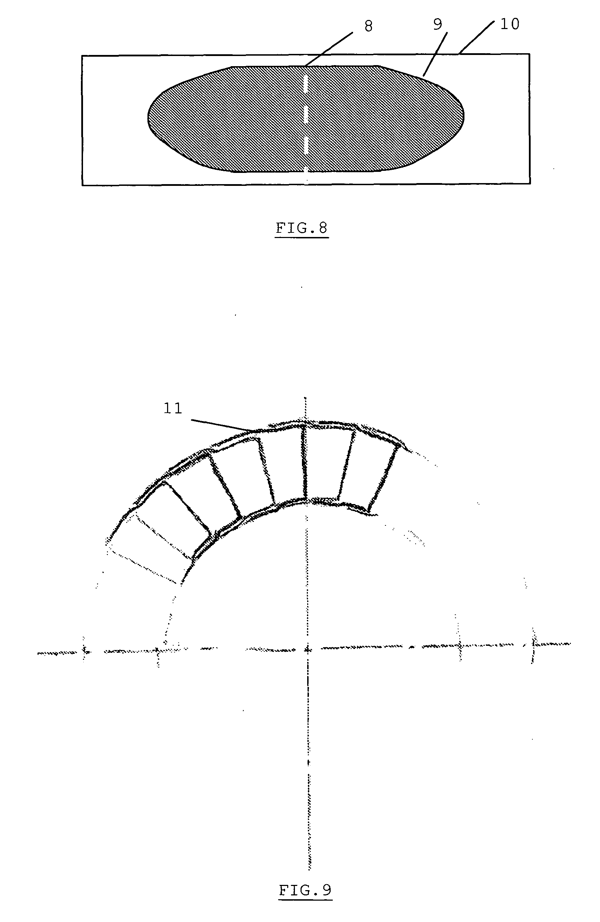

Il est bien entendu possible et d'ailleurs préférable d'appliquer des niveaux de précontrainte différents pour les fils à 0° élastomère de façon à donner à la tresse rétractée une géométrie optimale telle que, par exemple, un profil elliptique (voir figure 8) où la rétraction est moins importante à mi-corde qu'au niveau du bord d'attaque et de fuite de la préforme de l'aube. Selon l'invention, tout autre profil de tresse rétractée peut également convenir.

Dans une autre variante du procédé selon l'invention, les fils à 0° sont en matériau thermorétractable. Cette autre variante du procédé est également utilisée pour réaliser des préformes d'aubes présentant de larges variations d'épaisseur selon la hauteur. Cette variante du procédé comporte outre les étapes a), b), c), d) et e), une étape additionnelle f) de chauffage des tresses gigognes pour permettre la rétraction des différents fils à 0°. Afin de donner à la tresse rétractée une géométrie optimale, telle qu'un profil elliptique, le chauffage peut être non uniforme et/ou les fils à 0° peuvent avoir des coefficients de rétraction différents. Tout autre profil qu'un profil elliptique pourra également convenir.

La préforme ainsi fabriquée avec le procédé selon l'invention et ses variantes est ensuite l'objet d'une injection de résine par le procédé RTM pour réaliser l'aube statorique ou rotorique.

### Avantages du procédé

Le procédé selon l'invention ne nécessite pas l'utilisation d'un noyau lors de la fabrication des tresses.

Dans l'hypothèse d'une production de, par exemple, 1000 moteurs par an, avec quatre étages statoriques par moteur et 100 aubes par étage, le volume de production annuel peut être estimé à 400000 pièces. A raison de 200 jours ouvrables, cela équivaut à une production de 2000 pièces par jour. Dans le procédé de tressage selon l'invention, la vitesse de tressage est d'environ 1m/min. La hauteur d'une aube étant d'environ 0,1m, 600 préformes peuvent donc être produites à l'heure. Un même calcul s'applique pour les étages rotoriques.

Le procédé selon l'invention est automatique ce qui assure une reproductibilité élevée et un coût lié à la main d'oeuvre réduit. En effet, le coût lié au travail représente 60-80% du coût total de la plupart des pièces composites pour l'aéronautique [Triaxial braiding, http://www.fiberinnovations.com/PDFs/Triaxial%20Braiding.pdf].

Le risque de délamination est négligeable.

La raideur et la tenue en torsion sont très bonnes grâce à l'intégrité des tresses tubulaires et au placement hélicoïdal des fils.

Le procédé selon l'invention permet une très grande flexibilité de variation des paramètres liée au procédé de tressage tels que le pourcentage de fibres à 0°, l'angle de tressage, etc.

La technique ici présentée a un taux de chute négligeable alors que les pertes de matière en drapage sont importantes.

Les tresses biaxiales ont une bonne conformabilité, elles peuvent être pliées de façon à former une plateforme horizontale et une pale verticale, cette dernière présentant un angle d'attaque de ∼15° par rapport à l'axe du booster.

Contrairement aux machines généralement utilisées dans les composites pour l'aéronautique, le coût d'investissement d'une machine de tressage est relativement modeste (http://www.fiberinnovations.com/PDFs/Triaxial%20Braiding.pdf).

Le procédé selon l'invention pourrait également être utilisé pour réaliser des stators totalement en carbone/époxy. En effet, les aubes avec un profil en "C" 11 peuvent être réalisées de manière à permettre l'emboîtement des différentes aubes statoriques avec deux plateformes tel que montré à la figure 9. L'emboîtement des plateformes supérieures va alors former une virole extérieure en double peau alors que l'emboîtement des plateformes inférieures va former une virole intérieure en double peau.

## Revendications

1. Procédé automatique de fabrication d'une préforme d'aube statorique ou rotorique de turbomachine, **caractérisé en ce qu'**il comporte au moins les étapes successives suivantes:
a) une étape de tressage hélicoïdal d'une pluralité de tresses tubulaires emboîtées (1), encore appelées tresses gigognes, ladite étape étant réalisée dans des machines de tressage (2) placées en enfilade dans une direction de tressage;
b) une étape d'aplatissement des tresses gigognes (1);
c) une étape de couture des tresses gigognes (1) entre elles dans une direction perpendiculaire à la direction de tressage;
d) une étape d'enroulement des tresses gigognes (1) sur un mandrin de transport (3);
e) une étape de découpe des tresses gigognes (1) déroulées hors du mandrin de transport (3), ladite découpe s'effectuant dans une direction perpendiculaire à la direction de tressage.

2. Procédé selon la revendication 1, **caractérisé en ce que**, dans l'étape a), des fils à 0° (4) c'est-à-dire parallèles à la direction de tressage, sont insérés sur au moins une partie du périmètre d'une ou plusieurs tresses tubulaires lors de la fabrication de la ou des tresses.

3. Procédé selon la revendication 1, **caractérisé en ce que**, dans l'étape a), au moins un fil à 0° (4) ou un toron à 0°, c'est-à-dire parallèle à la direction de tressage, est inséré entre les tresses tubulaires (1).

4. Procédé selon les revendications 2 ou 3, **caractérisé en ce que** les fils ou torons insérés ont des diamètres différents.

5. Procédé selon l'une quelconque des revendications précédentes **caractérisé en ce que** les tresses tubulaires (1) sont disposées de manière non concentrique dans l'étape a).

6. Procédé selon l'une quelconque des revendications précédentes, **caractérisé en ce que** la vitesse circonférentielle de tressage est ajustée en cours de fabrication des tresses tubulaires (1) de sorte à faire varier de façon périodique l'épaisseur des tresses.

7. Procédé selon l'une quelconque des revendications précédentes, **caractérisé en ce qu'**au moins une des tresses tubulaires comporte des fils à 0°(4) en matériau élastomère ou en matériau thermorétractable.

8. Procédé selon la revendication 7, **caractérisé en ce que** les fils à 0° (4) en matériau élastomère sont mis en précontrainte lors de l'étape a).

9. Procédé selon la revendication 8 **caractérisé en ce que**, après l'étape d) d'enroulement, les tresses tubulaires (1) déroulées hors du mandrin (3) sont étendues et clamées dans une étape additionnelle d') et **en ce que**, après l'étape de découpe e), la ou les tresses tubulaires comprenant les fils élastomères se rétracte(nt).

10. Procédé selon la revendication 8 **caractérisé en ce que** les fils sont mis en précontrainte avec des niveaux de tension différents.

11. Procédé selon la revendication 7 **caractérisé en ce que**, lorsque les fils sont thermorétractables, le procédé comprend une étape additionnelle f) de chauffage des tresses gigognes, ladite étape f) se déroulant après l'étape e) de découpe.

12. Procédé selon la revendication 11 **caractérisé en ce que** le chauffage appliqué n'est pas uniforme et/ou **en ce que** les fils thermorétractables ont des coefficients de rétraction différents.

13. Procédé selon l'une quelconque des revendications précédentes comprenant, après la réalisation de la préforme, une étape additionnelle d'injection de résine de la préforme par le procédé RTM (Resin Transfer Moulding).

14. Aube statorique ou rotorique de turbomachine obtenue au moyen du procédé selon l'une quelconque des revendications précédentes.

15. Aube statorique ou rotorique de turbomachine selon la revendication 14, **caractérisée en ce que** ladite aube présente une épaisseur variable suivant sa corde et/ou suivant sa hauteur.

## Claims

1. Automatic method for manufacturing a preform for the stator or rotor blade of a turbine engine, **characterized in that** it comprises at least the following successive steps:
a) a step for helically braiding a plurality of interlocked tubular braids (1), further called nested braids, said step being carried out in braiding machines (2) arranged in a row in a braiding direction;
b) a step for flattening the nested braids (1);
c) a step for stitching together the nested braids (1) in a direction that is perpendicular to the braiding direction;
d) a step for winding the nested braids (1) onto a transport mandrel (3);
e) a step for cutting the nested braids (1) unwound from the transport mandrel (3), said cutting being carried out in a direction that is perpendicular to the braiding direction.

2. Method according to Claim 1, **characterized in that**, in step a), yarns at 0° (4), i.e. parallel to the braiding direction, are inserted on at least one portion of the perimeter of one or more tubular braids during the manufacturing of the braid(s).

3. Method according to Claim 1, **characterized in that**, in step a), at least one 0°-yarn (4) or one strand at 0°, i.e. parallel to the braiding direction, is inserted between the tubular braids (1).

4. Method according to Claims 2 or 3, **characterized in that** the inserted yarns or strands have different diameters.

5. Method according to any of the preceding claims, **characterized in that** the tubular braids (1) are positioned in a non-concentric way in step a).

6. Method according to any of the preceding claims, **characterized in that** the braiding circumferential rate is adjusted during the manufacturing of the tubular braids (1) so as to periodically vary the thickness of the braids.

7. Method according to any of the preceding claims, **characterized in that** at least one of the tubular braids comprises 0°-yarns (4) in an elastomeric material or in a heat-shrinkable material.

8. Method according to Claim 7, **characterized in that** the 0°-yarns (4) in elastomeric material are pre-tensioned during step a).

9. Method according to Claim 8, **characterized in that**, after winding step d), the tubular braids (1) unwound from the mandrel (3) are extended and clamped in an additional step d'), and **in that** after cutting step e), the tubular braid(s) comprising the elastomeric yarns retract(s).

10. Method according to Claim 8, **characterized in that** the yarns are pre-tensioned with different tension levels.

11. Method according to Claim 7, **characterized in that**, when the yarns are heat-shrinkable, the method comprises an additional step f) for heating the nested braids, said step f) occurring after cutting step e).

12. Method according to Claim 11, **characterized in that** the applied heating is not uniform, and/or **in that** the heat-shrinkable yarns have different retraction coefficients.

13. Method according to any of the preceding claims, comprising, after the preform is manufactured, an additional step for injecting resin into the preform by means of the RTM (Resin Transfer Molding) method.

14. The stator or rotor blade of a turbine engine obtained by means of the method according to any of the preceding claims.

15. The stator or rotor blade of a turbine engine according to Claim 14, **characterized in that** said blade has variable thickness according to its chord and/or to its height.

## Patentansprüche

1. Automatisches Verfahren zur Herstellung einer Vorform einer Stator- oder Rotorschaufel eines Turbotriebwerks, **dadurch gekennzeichnet, dass** es mindestens die folgenden aufeinanderfolgenden Schritte umfasst:
a) einen Schritt des spiralförmigen Flechtens einer Vielzahl verflochtener rohrförmiger Bänder (1), auch als Flechtbänder bezeichnet, wobei der Schritt in Flechtmaschinen (2) durchgeführt wird, die in langer Reihe in einer Flechtrichtung aufgestellt sind,
b) einen Schritt der Abflachung der Flechtbänder (1),
c) einen Schritt des Vernähens der Flechtbänder (1) untereinander in einer Richtung rechtwinklig zur Flechtrichtung,
d) einen Schritt des Aufrollens der Flechtbänder (1) auf eine Transporthülse (3),
e) einen Schritt des Schneidens der von der Transporthülse (3) abgerollten Flechtbänder (1), wobei das Schneiden in einer Richtung rechtwinklig zur Flechtrichtung erfolgt.

2. Verfahren nach Anspruch 1, **dadurch gekennzeichnet, dass** in Schritt a) Fäden mit 0° (4), das heißt parallel zur Flechtrichtung, bei der Herstellung des oder der Bänder in mindestens einem Abschnitt des Umfangs eines oder mehrerer rohrförmiger Bänder eingesetzt werden.

3. Verfahren nach Anspruch 1, **dadurch gekennzeichnet, dass** in Schritt a) mindestens ein Faden mit 0° (4) oder eine Litze mit 0°, das heißt parallel zur Flechtrichtung, zwischen die röhrförmigen Bänder (1) eingesetzt wird.

4. Verfahren nach den Ansprüchen 2 oder 3, **dadurch gekennzeichnet, dass** die eingesetzten Fäden oder Litzen verschiedene Durchmesser haben.

5. Verfahren nach einem der vorangehenden Ansprüche, **dadurch gekennzeichnet, dass** die rohrförmigen Bänder (1) in Schritt a) nicht konzentrisch angeordnet sind.

6. Verfahren nach einem der vorangehenden Ansprüche, **dadurch gekennzeichnet, dass** die Umfangsflechtgeschwindigkeit während der Herstellung der rohrförmigen Bänder (1) derart angepasst wird, dass die Dicke der Bänder in Intervallen variiert.

7. Verfahren nach einem der vorangehenden Ansprüche, **dadurch gekennzeichnet, dass** mindestens eines der rohrförmigen Bänder Fäden mit 0° (4) aus Elastomermaterial oder aus thermisch schrumpfbarem Material aufweist.

8. Verfahren nach Anspruch 7, **dadurch gekennzeichnet, dass** die Fäden mit 0° (4) aus Elastomermaterial während Schritt a) vorgespannt werden.

9. Verfahren nach Anspruch 8, **dadurch gekennzeichnet, dass** die rohrförmigen Bänder (1), die nach dem Schritt d) des Aufrollens von der Hülse (3) abgerollt werden, in einem zusätzlichen Schritt d') gestreckt und geklammert werden und dass sich das rohrförmige Band oder die rohrförmigen Bänder, die Elastomerfäden enthalten, nach dem Schritt des Schneidens e) zusammenzieht/-ziehen.

10. Verfahren nach Anspruch 8, **dadurch gekennzeichnet, dass** die Fäden mit verschiedenen Spannungsniveaus vorgespannt werden.

11. Verfahren nach Anspruch 7, **dadurch gekennzeichnet, dass**, wenn die Fäden thermisch schrumpfbar sind, das Verfahren einen zusätzlichen Schritt f) des Erwärmens der Flechtbänder umfasst, wobei der Schritt f) nach dem Schritt e) des Schneidens erfolgt.

12. Verfahren nach Anspruch 11, **dadurch gekennzeichnet, dass** das Erwärmen nicht gleichmäßig erfolgt und/oder dass die thermisch schrumpfbaren Fäden unterschiedliche Retraktionskoeffizienten haben.

13. Verfahren nach einem der vorangehenden Ansprüche, das nach der Herstellung der Vorform einen zusätzlichen Schritt des Einspritzens von Harz in die Vorform anhand des RTM-Verfahrens (Resin Transfer Moulding) umfasst.

14. Stator- oder Rotorschaufel eines Turbotriebwerks, die anhand des Verfahrens nach einem der vorangehenden Ansprüche gewonnen wird.

15. Stator- oder Rotorschaufel eines Turbotriebwerks nach Anspruch 14, **dadurch gekennzeichnet, dass** die Schaufel eine variable Dicke gemäß ihrer Spannweite und/oder ihrer Höhe aufweist.
